# FASCICULE DE BREVET EUROPEEN

(11) **EP 2 780 511 B1**
(45) Date de publication et mention de la délivrance du brevet: **02.05.2018**
(21) Numéro de dépôt: 12795551.6
(22) Date de dépôt: 14.11.2012
(51) Int. Cl.: E03B 9/04, E03B 9/08, F16L 1/11

(54) **PROCÉDÉ DE DÉTECTION D'UNE CANALISATION ENTERRÉE EN UTILISANT UNE BOUCHE À CLÉ**
METHOD FOR DETECTING A BURIED PIPE SYSTEM USING A HYDRANT
VERFAHREN ZUR ORTUNG EINES ERDVERLEGTEN ROHRLEITUNGSNETZES UNTER VERWENDUNG EINES HYDRANTEN

(30) Priorité: 18.11.2011 FR 1160502
(43) Date de publication de la demande: 24.09.2014
(73) Titulaire: Société Plymouth Française, 69320 Feyzin (FR)
(72) Inventeur: SAAD, Mounir, 67000 Strasbourg (FR); ARNAUD, Daniel, 42100 Saint Etienne (FR)
(74) Mandataire: Verriest, Philippe
(86) Numéro de dépôt international: PCT/FR2012/052631
(87) Numéro de publication internationale: WO 2013/072628

(56) Documents cités:
- DE-A1- 19 725 431
- DE-A1-102007 025 494
- DE-A1-102009 019 984
- FR-A1- 2 776 135
- FR-A1- 2 809 495
- US-A1- 2003 094 298
- US-A1- 2007 075 162

## Description

La présente invention concerne un procédé de détection d'une canalisation enterrée à l'aide d'une bouche à clé.

Une bouche à clé est un dispositif destiné à être situé au niveau du sol de manière à permettre l'accès, à l'aide d'une clé appropriée, à l'organe de manoeuvre d'une vanne d'une canalisation enterrée, telle qu'une canalisation de distribution d'eau. Une telle bouche à clé comportant un dispositif pour sa détection est décrit dans le document DE 10 2009 019 984.

Il importe, pour un gain de temps et de coûts mais aussi de sécurité, de pouvoir détecter la présence d'une telle canalisation, et de la localiser avec précision, sans creuser le sol, ni détruire des ouvrages, à l'occasion de travaux ultérieurs. Un tel procédé est décrit dan le document DE197 25 431.

Plusieurs procédés peuvent être utilisés pour réaliser la détection de canalisations enterrées.

La détection par voie électromagnétique est la méthode la plus utilisée. Cette détection électromagnétique peut être effectuée à l'aide de détecteurs électromagnétiques reposant sur la détection active d'un signal électromagnétique.

Un premier procédé de détection active connu consiste à injecter, à l'aide d'un générateur de courant, un signal électrique dans un fil électriquement conducteur associé à la canalisation à identifier et disposé suivant le tracé de cette dernière, et ce via des boîtiers de connexion installés à distances régulières le long de la canalisation pour servir de points d'accès, et à utiliser un détecteur électromagnétique agencé pour capter un champ électromagnétique créé par un courant alternatif circulant dans le fil électriquement conducteur.

Un tel procédé de détection s'avère onéreux puisqu'il nécessite l'installation d'un nombre important de boîtiers de connexion le long de la canalisation à détecter, chaque boîtier étant par exemple disposé soit à l'intérieur d'une galerie technique, soit sur une borne non enterrée.

De plus, un tel procédé est peu adapté pour la détection de canalisations de distribution d'eau, puisqu'il est malaisé d'installer des boîtiers de connexion dans le voisinage de réseaux d'eau.

Un deuxième procédé de détection active connu consiste à injecter, à l'aide d'un générateur de courant, un signal électrique directement dans la canalisation à identifier lorsque cette dernière est électriquement conductrice.

Un tel procédé de détection n'est pas adapté pour la détection de canalisations d'eau, puisque d'une part une partie importante des canalisations d'eau utilisées ne sont pas électriquement conductrices, et d'autre part les canalisations d'eau sont pour la plupart inaccessibles depuis la surface. En outre, dans le cas des canalisations d'eau en fonte, chaque canalisation comporte des éléments individuels reliés entre eux par des joints en élastomère. Ainsi, un signal électrique injecté dans la canalisation d'eau ne pourrait pas se propager au-delà du premier joint en élastomère, et donc rendrait impossible le suivi de la canalisation d'eau.

La présente invention vise à remédier à ces inconvénients.

Le problème technique à la base de l'invention consiste donc à fournir un procédé qui permet une détection aisée et rapide d'une canalisation enterrée, telle qu'une canalisation de distribution d'eau.

A cet effet, la présente invention concerne un procédé selon la revendication 1. La structure de la bouche à clé selon l'invention permet d'injecter un signal électrique dans un fil électriquement conducteur associé à une canalisation tout simplement en raccordant un générateur de courant directement au corps de la bouche à clé. Il en résulte une localisation aisée de la canalisation associée au fil électriquement conducteur en utilisant un détecteur électromagnétique agencé pour capter le champ électromagnétique créé par le courant alternatif circulant dans le fil électriquement conducteur.

De plus, la localisation d'une canalisation à l'aide d'une bouche à clé selon l'invention est économique, puisqu'elle ne nécessite pas l'installation d'un nombre important de boîtiers de connexion en plus de l'installation des bouches à clé.

Avantageusement, la bouche à clé est destinée à être située au niveau du sol.

De préférence, la bouche à clé est agencée pour permettre l'accès à l'organe de manoeuvre de la vanne montée sur la canalisation. En particulier, le corps électriquement conducteur est destiné au passage d'une clé d'actionnement de l'organe de manoeuvre de la vanne montée sur la canalisation. De façon avantageuse, le corps électriquement conducteur comporte une portion tubulaire destinée au passage de ladite clé d'actionnement.

Il doit être noté que chaque fil électriquement conducteur est mis à la terre par l'intermédiaire du corps de la bouche à clé.

Selon un mode de réalisation de l'invention, les moyens de connexion sont montés sur le corps de manière à maintenir, en condition d'utilisation, une continuité électrique entre le corps et chaque fil électriquement conducteur.

De façon préférentielle, les moyens de connexion sont électriquement conducteurs.

De préférence, le corps délimite au moins un logement dans lequel sont logés les moyens de connexion. Selon un mode de réalisation de l'invention, le corps délimite deux logements, par exemple radialement opposés l'un à l'autre.

Le ou chaque logement débouche par exemple vers l'extérieur du corps, et de préférence sensiblement radialement vers l'extérieur du corps.

Avantageusement, le corps comporte une embase délimitant au moins en partie le ou chaque logement. L'embase forme par exemple la paroi inférieure de chaque logement.

Chaque logement est de préférence délimité par une paroi supérieure s'étendant sensiblement parallèlement à l'embase, deux parois latérales s'étendant sensiblement perpendiculairement la paroi supérieure, et une paroi inférieure formée par l'embase. Les parois supérieure et latérales délimitant chaque logement s'étendent chacune de préférence à partir d'une portion tubulaire du corps.

Selon un mode de réalisation de l'invention, le corps comporte une portion tubulaire et une collerette périphérique s'étendant sensiblement radialement à partir du bord inférieur de la portion tubulaire, la collerette périphérique formant l'embase.

De façon préférentielle, l'embase comporte au moins une ouverture de passage débouchant dans le ou chaque logement et destinée au passage d'un fil électriquement conducteur. Selon un mode de réalisation de l'invention, l'embase comporte deux ouvertures de passage débouchant dans chaque logement.

Avantageusement, les moyens de connexion comportent au moins un organe de connexion électriquement conducteur sur lequel est destiné à être connecté au moins un fil électriquement conducteur, et de préférence deux fils électriquement conducteurs.

L'organe de connexion comprend par exemple au moins une portion d'appui et au moins une portion de serrage destinée à serrer le fil électriquement conducteur correspondant contre la portion d'appui. Chaque portion de serrage est formée avantageusement par une languette de serrage élastiquement déformable. Ces dispositions permettent une fixation rapide d'un fil électriquement conducteur, et ce sans nécessiter l'utilisation d'un outil.

L'organe de connexion peut être réalisé dans le même matériau que l'âme d'un fil électriquement conducteur, et de préférence en acier inoxydable, par exemple en acier inoxydable de type 304L. L'organe de connexion est de préférence monobloc, et par exemple réalisé par emboutissage.

Selon un mode de réalisation de l'invention, l'organe de connexion comporte une partie de support sensiblement plane, et une partie en forme d'étrier s'étendant par dessus la partie de support et dont les extrémités sont solidaires de la partie de support.

Selon un mode de réalisation de l'invention, les moyens de connexion comportent deux organes de connexion électriquement conducteurs. Selon ce mode de réalisation, chaque organe de connexion est de préférence monté dans un logement différent délimité par le corps.

Préférentiellement, la bouche à clé comprend au moins un boîtier de protection réalisé en un matériau électriquement non conducteur dans lequel sont montés les moyens de connexion. Le boîtier de protection est de préférence logé dans le ou l'un des logements délimités par le corps. Le boîtier de protection est par exemple conformé pour obturer au moins en partie le logement correspondant.

Selon un mode de réalisation de l'invention, le boîtier de protection comprend des moyens d'immobilisation agencés pour immobiliser les moyens de connexion. Les moyens d'immobilisation comportent par exemple deux nervures d'immobilisation agencées pour plaquer les moyens de connexion contre le boîtier de protection.

Selon un mode de réalisation de l'invention, le boîtier de protection prend appui contre la face supérieure de l'embase.

Le boîtier de protection est par exemple réalisé en matière plastique, et peut être translucide de manière à permettre à un opérateur de contrôler le branchement d'un fil électriquement conducteur sur les moyens de connexion.

Le boîtier de protection comporte de préférence au moins une ouverture du passage destinée au passage d'un fil électriquement conducteur.

Selon un mode de réalisation de l'invention, la bouche à clé comprend des moyens de fixation agencés pour fixer les moyens de connexion sur le corps. Les moyens de fixation sont préférentiellement également agencés pour fixer le boîtier de protection logeant les moyens de connexion sur le corps. Les moyens de fixation sont de préférence électriquement conducteurs de manière à assurer une continuité électrique entre les moyens de connexion et le corps. Les moyens de fixation comportent par exemple au moins un organe de fixation électriquement conducteur, tel qu'une vis de fixation.

Selon un autre mode de réalisation de l'invention, les moyens de fixation sont agencés pour fixer par aimantation les moyens de connexion sur le corps.

Le corps est de préférence métallique, et par exemple en fonte.

La présente invention concerne donc un procédé de détection d'une canalisation enterrée, par exemple de distribution d'eau, comprenant les étapes consistant à :
- prévoir une bouche à clé comportant un corps électriquement conducteur présentant une forme générale tubulaire,
- fixer le corps de la bouche à clé dans le sol à l'aplomb d'une vanne montée sur la canalisation à détecter,
- relier électriquement au corps de la bouche à clé au moins un fil électriquement conducteur s'étendant au moins en partie le long de la canalisation,
- injecter un signal électrique dans le corps de la bouche à clé, et
- détecter le champ électromagnétique généré par l'au moins un fil électriquement conducteur.

L'étape d'injection d'un signal électrique est de préférence réalisée à l'aide d'un générateur de courant. L'étape de détection est avantageusement réalisée à l'aide d'un détecteur électromagnétique.

De toute façon l'invention sera bien comprise à l'aide de la description qui suit en référence au dessin schématique annexé représentant, à titre d'exemple non limitatif, une forme d'exécution de cette bouche à clé.
Figure 1 est une vue en perspective d'une bouche à clé selon l'invention.
Figure 2 est une vue de dessous de la bouche à clé de la figure 1.
Figure 3 est une vue en perspective d'un organe de connexion de la bouche à clé de la figure 1.
Figure 4 est une vue en perspective de l'organe de connexion de la figure 3 monté dans son boîtier de protection.
Figure 5 est une vue en coupe, en perspective, de la bouche à clé de la figure 1.
Figure 6 est une vue arrière en perspective d'un capot de protection appartenant à la bouche à clé de la figure 1

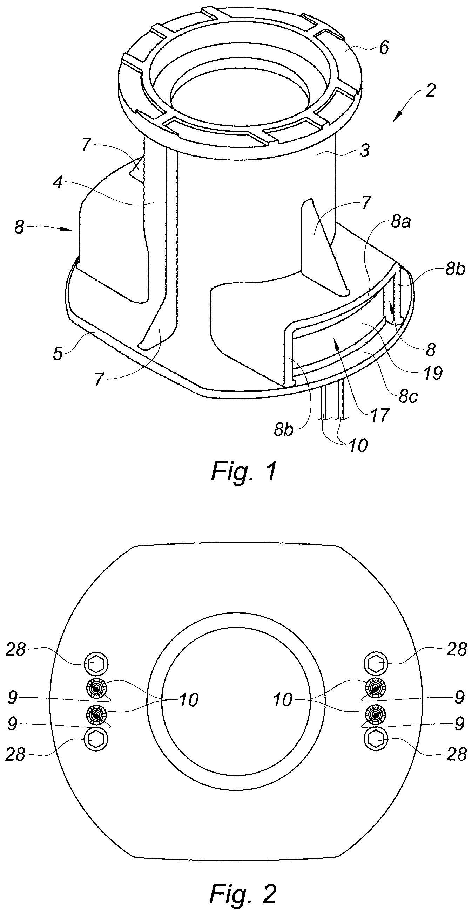

Les figures 1 à 4 représentent une bouche à clé 2 destinée à être située au niveau du sol de manière à permettre l'accès, à l'aide d'une clé appropriée, à l'organe de manoeuvre d'une vanne d'une canalisation enterrée, telle qu'une canalisation de distribution d'eau.

La bouche à clé 2 comporte un corps 3 métallique, de préférence en fonte, présentant une forme générale tubulaire. Le corps 3 comprend une portion tubulaire 4, une embase 5 formée par une collerette périphérique inférieure s'étendant radialement à partir du bord inférieur de la portion tubulaire 4, et une collerette périphérique supérieure 6 s'étendant radialement à partir du bord supérieur de la portion tubulaire 4. La collerette périphérique supérieure 6 est destinée à recevoir un tampon de fermeture (non représenté sur les figures) et à être située au niveau de la chaussée. La portion tubulaire 4 est destinée au passage d'une clé d'actionnement de l'organe de manoeuvre de la vanne correspondant.

Le corps 3 comprend des ailes longitudinales 7 destinées à immobiliser en rotation le corps 3 en coopérant avec le sol. Les ailes longitudinales 7 sont régulièrement réparties sur la périphérie de la portion tubulaire 4.

Le corps 3 délimite deux logements 8 radialement opposés l'un à l'autre. Chaque logement 8 débouche radialement vers l'extérieur du corps 3. Chaque logement 8 est délimité par une paroi supérieure 8a s'étendant sensiblement parallèlement à l'embase 5, deux parois latérales 8b s'étendant sensiblement perpendiculairement la paroi supérieure 8a, et une paroi inférieure 8c formée par l'embase 5. Les parois supérieure et latérales 8a, 8b délimitant chaque logement 8 s'étendent chacune à partir de la portion tubulaire 4 du corps 3.

Comme montré sur la figure 2, l'embase 5 comprend une première paire d'ouvertures de passage 9 débouchant dans l'un des logements 8 et une deuxième paire d'ouvertures de passage 9 débouchant dans l'autre logement 8. Chaque ouverture de passage 9 est adaptée pour le passage d'un fil électriquement conducteur 10 s'étendant le long de la canalisation.

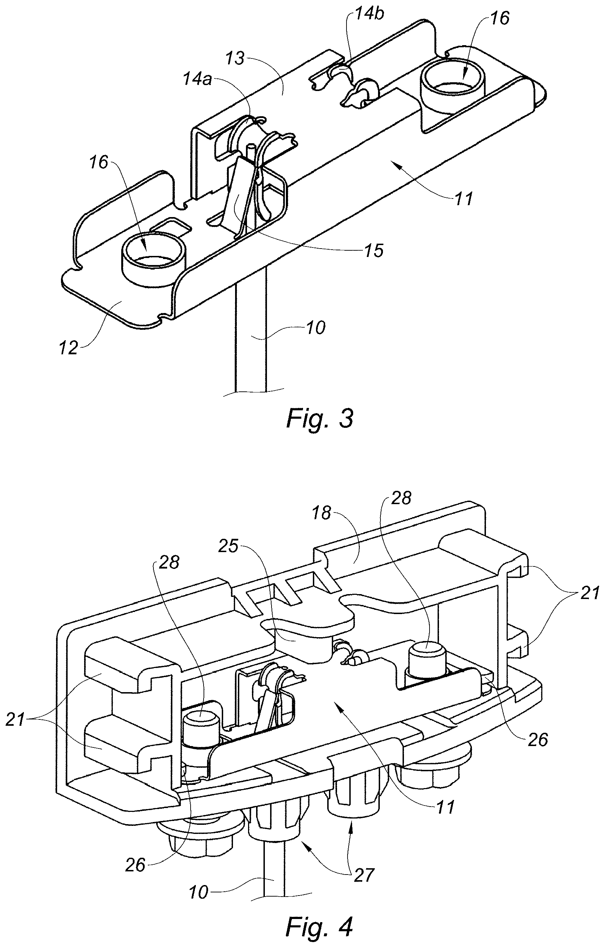

Comme montré plus particulièrement sur la figure 3, la bouche à clé 2 comporte un organe de connexion 11 électriquement conducteur destiné à la connexion de deux fils électriquement conducteur 10. L'organe de connexion 11 est avantageusement monobloc, et par exemple réalisé par emboutissage. L'organe de connexion 11 est de préférence réalisé dans le même matériau que l'âme de chaque fil électriquement conducteur 10, et par exemple en acier inoxydable, tel que l'acier inoxydable de type 304L.

L'organe de connexion 11 comporte une partie de support 12 sensiblement plane de forme rectangulaire, et une partie repliée 13 en forme d'étrier s'étendant par dessus la partie de support 12 et dont l'extrémité libre est fixée sur la partie de support 12.

L'organe de connexion 11 comprend une première portion d'appui 14a s'étendant à partir d'un premier bord latéral de la portion repliée 13 et une deuxième portion d'appui 14b s'étendant à partir d'un deuxième bord latéral de la portion repliée 13. Les première et deuxième portions d'appui 14a, 14b s'étendent chacune en direction de la partie de support 12 et présentent chacune de préférence une section concave.

L'organe de connexion 11 comprend une première languette de serrage 15 élastiquement déformable s'étendant à partir de la partie de support 12 et destinée à serrer un premier fil électriquement conducteur 10 contre la première portion d'appui 14a, et une deuxième languette de serrage (non représentée sur les figures) élastiquement déformable s'étendant à partir de la partie de support 12 et destinée à serrer un deuxième fil électriquement conducteur 10 contre la deuxième portion d'appui 14b. Chacune des première et deuxième languettes de serrage 15 est plus particulièrement destinée à serrer l'âme du fil électriquement conducteur 10 respectif.

L'organe de connexion 11 comprend en outre deux ouvertures de passage 16 ménagées sur la partie de support 12 et adaptées pour permettre sa fixation sur le corps 3, comme cela sera explicité ci-après.

La bouche à clé 2 comprend également un boîtier de protection 17 réalisé en un matériau électriquement non conducteur, par exemple en matière plastique. Le boîtier de protection 17 peut par exemple être translucide.

Le boîtier de protection 17 se compose d'une base de fixation 18 qui assure le positionnement et la fixation de l'organe de connexion 11, et d'un capot de protection 19 destiné à être monté, par exemple par encliquetage, sur la base de fixation 18.

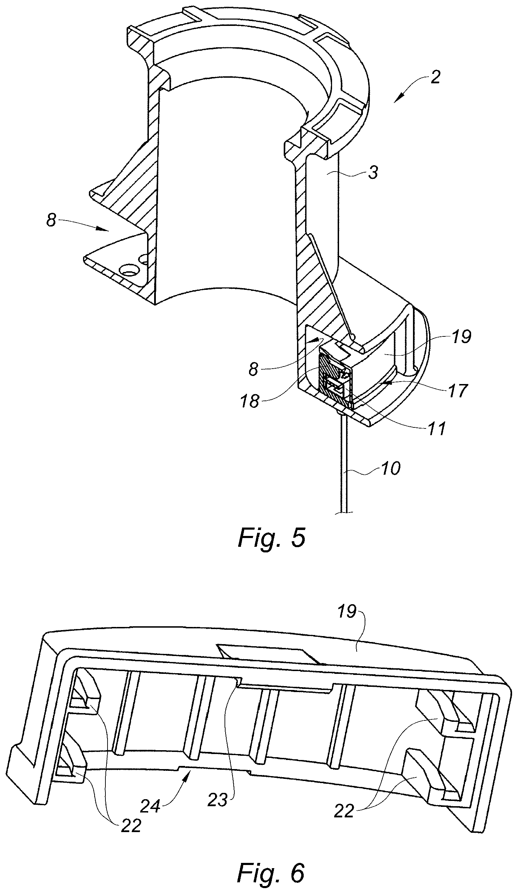

Comme montré sur les figures 4 et 6, la base de fixation 18 comprend deux paires de crochets 21 latéraux et tournés vers le bas, et le capot de protection 19 comprend deux paires de crochets 22 latéraux et tournés vers le haut, les crochets 21 étant agencés pour coopérer avec les crochets 22. Le capot de protection 19 comprend en outre une languette d'encliquetage 23 agencée pour coopérer avec la base de fixation 18 de manière à fixer le capot de protection sur la base de fixation. Le capot de protection 19 comporte une encoche 24 ménagée dans le bord inférieur du capot de protection et destinée à recevoir un outil, tel qu'un tournevis. Ces dispositions permettent de soulever le capot de protection à l'aide d'un outil introduit dans l'encoche 24 afin de désengager la languette d'encliquetage 23 et autoriser un démontage du capot de protection 19.

La base de fixation 18 comprend un bossage d'immobilisation 25 et deux nervures d'immobilisation 26 agencés pour immobiliser l'organe de connexion 11, et plus particulièrement pour plaquer la partie de support 12 contre la paroi inférieure de la base de fixation 18. Le bossage d'immobilisation 25 est plus particulièrement agencé pour coopérer avec la portion repliée 13, tandis que les nervures d'immobilisation 22 sont plus particulièrement agencées pour coopérer avec les portions d'extrémité de la partie de support 12.

Comme montré sur la figure 4, la base de fixation 18 comporte également deux ouvertures de passage 27 adaptées chacune pour le passage d'un fil électriquement conducteur 10.

Comme montré respectivement sur les figures 5 et 1, l'organe de connexion 11 est monté dans le boîtier de protection 17, et ces derniers sont logés dans l'un des logements 8 délimités par le corps 3. Le boîtier de protection 17 prend appui contre la face supérieure de l'embase 5. Comme montré sur les figures 1 et 5, le capot de protection 19 est conformé pour obturer en partie le logement 8.

La bouche à clé 2 comprend en outre deux vis de fixation 28 agencées pour fixer l'organe de connexion 11 sur le corps 3, et plus particulièrement sur l'embase 5 du corps 3. Les vis de fixation 28 sont métalliques de manière à assurer une continuité électrique entre l'organe de connexion 11 et le corps 3. Ainsi, en condition d'utilisation, l'organe de connexion 11 assure une continuité électrique entre le corps 3 et chaque fil électriquement conducteur 10.

Chaque vis de fixation 28 comprend une tête prenant appui contre la face inférieure de l'embase 5, et un corps de vis s'étendant à travers successivement une ouverture de passage ménagées dans l'embase 5, une ouverture de passage ménagée dans la base de fixation 18, et l'une des ouvertures de passage 16 ménagées dans l'organe de connexion 11.

Selon un mode de réalisation de l'invention montré sur la figure 2, la bouche à clé 2 comporte deux organes de connexion 11 montés chacun dans un boîtier de protection 17 et logés chacun dans l'un des logements 8, chaque organe de fixation 11 étant fixé sur l'embase 5 à l'aide de deux vis de fixation 28 et étant adapté pour le raccordement de deux fils électriquement conducteur 10.

Un procédé de détection d'une canalisation enterrée, par exemple de distribution d'eau, à l'aide d'une bouche à clé selon l'invention va maintenant être décrit.

Ce procédé comprend les étapes consistant à :
- prévoir une bouche à clé 2,
- fixer le corps 3 de la bouche à clé dans le sol à l'aplomb d'une vanne montée sur la canalisation à détecter,
- dénuder l'une des extrémités d'un fil électriquement conducteur 10,
- connecter l'extrémité dénudée du fil électriquement conducteur 10 sur l'organe de connexion 11,
- injecter un signal électrique dans le corps 3 de la bouche à clé 2 à l'aide d'un générateur de courant, et
- détecter le champ électromagnétique généré par le fil électriquement conducteur 10 à l'aide d'un détecteur électromagnétique.

Comme il va de soi, l'invention ne se limite pas à la seule forme d'exécution de cette bouche à clé, décrite ci-dessus à titre d'exemple, elle en embrasse au contraire toutes les variantes de réalisation limitées par les revendications annexées.

## Revendications

1. Procédé de détection d'une canalisation enterrée, par exemple de distribution d'eau, comprenant les étapes consistant à :
- prévoir une bouche à clé (2) comportant un corps électriquement conducteur (3) présentant une forme générale tubulaire,
- fixer le corps (3) de la bouche à clé dans le sol à l'aplomb d'une vanne montée sur la canalisation à détecter,
- relier électriquement au corps (3) de la bouche à clé (2) au moins un fil électriquement conducteur (10) s'étendant au moins en partie le long de la canalisation,
- injecter un signal électrique dans le corps (3) de la bouche à clé (2), et
- détecter le champ électromagnétique généré par l'au moins un fil électriquement conducteur (10).

2. Procédé de détection selon la revendication 1, dans lequel la bouche à clé prévue comporte des moyens de connexion (11) auxquels est connecté l'au moins un fil électriquement conducteur (10), les moyens de connexion (11) étant reliés au corps (3) de manière à maintenir une continuité électrique entre le corps (3) et l'au moins un fil électriquement conducteur (10).

3. Procédé de détection selon la revendication 2, dans lequel les moyens de connexion (11) sont montés sur le corps (3) de manière à maintenir une continuité électrique entre le corps (3) et l'au moins un fil électriquement conducteur (10).

4. Procédé de détection selon la revendication 2 ou 3, dans lequel le corps (3) délimite au moins un logement (8) dans lequel sont logés les moyens de connexion.

5. Procédé de détection selon la revendication 4, dans lequel le corps (3) comporte une embase (5) délimitant au moins en partie le logement (8).

6. Procédé de détection selon la revendication 5, dans lequel l'embase (5) comporte au moins une ouverture de passage (9) débouchant dans le logement (8) et destinée au passage de l'au moins un fil électriquement conducteur (10).

7. Procédé de détection selon l'une des revendications 2 à 6, dans lequel les moyens de connexion comportent au moins un organe de connexion (11) électriquement conducteur sur lequel est connecté l'au moins un fil électriquement conducteur (10).

8. Procédé de détection selon la revendication 7, dans lequel l'organe de connexion (11) comprend au moins une portion d'appui (14a, 14b) et au moins une portion de serrage (15) destinée à serrer l'au moins un fil électriquement conducteur (10) correspondant contre la portion d'appui.

9. Procédé de détection selon la revendication 8, dans lequel la portion de serrage (15) est formée par une languette de serrage élastiquement déformable.

10. Procédé de détection selon l'une des revendications 2 à 9, dans lequel la bouche à clé prévue comprend au moins un boîtier de protection (17) réalisé en un matériau électriquement non conducteur dans lequel sont montés les moyens de connexion (11).

11. Procédé de détection selon l'une des revendications 2 à 10, dans lequel la bouche à clé prévue comprend des moyens de fixation (28) agencés pour fixer les moyens de connexion (11) sur le corps (3).

12. Procédé de détection selon la revendication 11, dans lequel les moyens de fixation (28) sont électriquement conducteurs de manière à assurer une continuité électrique entre les moyens de connexion (11) et le corps (3).

## Patentansprüche

1. Verfahren zur Ortung einer erdverlegten Rohrleitung, zum Beispiel zur Wasserverteilung, das die Schritte umfasst, die aus Folgendem bestehen:
- Vorsehen eines Hydranten (2), der einen elektrisch leitenden Körper (3) umfasst, der eine allgemeine Röhrenform aufweist,
- Befestigen des Körpers (3) des Hydranten in dem Boden in der Senkrechten eines Schiebers, der auf die zu ortende Rohrleitung montiert ist,
- elektrisches Verbinden mit dem Körper (3) des Hydranten (2) mindestens eines elektrisch leitenden Drahts (10), der sich mindestens zum Teil entlang der Rohrleitung erstreckt,
- Injizieren eines elektrischen Signals in den Körper (3) des Hydranten (2), und
- Orten des Magnetfelds, das von dem mindestens einen elektrisch leitenden Draht (10) erzeugt wird.

2. Ortungsverfahren nach Anspruch 1, wobei der vorgesehene Hydrant Verbindungsmittel (11) umfasst, mit welchen mindestens ein elektrisch leitender Draht (10) verbunden ist, wobei die Verbindungsmittel (11) mit dem Körper (3) derart verbunden sind, dass eine elektrische Kontinuität zwischen dem Körper (3) und dem mindestens einen elektrisch leitenden Draht (10) aufrechterhalten wird.

3. Ortungsverfahren nach Anspruch 2, wobei die Verbindungsmittel (11) auf den Körper (3) derart montiert sind, dass eine elektrische Kontinuität zwischen dem Körper (3) und dem mindestens einen elektrisch leitenden Draht (10) aufrechterhalten wird.

4. Ortungsverfahren nach Anspruch 2 oder 3, wobei der Körper (3) mindestens eine Aufnahme (8) abgrenzt, in der die Verbindungsmittel aufgenommen sind.

5. Ortungsverfahren nach Anspruch 4, wobei der Körper (3) einen Sockel (5) umfasst, der die Aufnahme (8) mindestens zum Teil abgrenzt.

6. Ortungsverfahren nach Anspruch 5, wobei der Sockel (5) mindestens eine Durchgangsöffnung (9) umfasst, die in die Aufnahme (8) mündet und zum Durchgehen des mindestens einen elektrisch leitenden Drahts (10) bestimmt ist.

7. Ortungsverfahren nach einem der Ansprüche 2 bis 6, wobei die Verbindungsmittel mindestens ein elektrisch leitendes Verbindungselement (11) umfassen, auf dem der mindestens eine elektrisch leitende Draht (10) verbunden ist.

8. Ortungsverfahren nach Anspruch 7, wobei das Verbindungsorgan (11) mindestens einen Auflageabschnitt (14a, 14b) und mindestens einen Spannabschnitt (15), der dazu bestimmt ist, den entsprechenden mindestens einen elektrisch leitenden Draht (10) gegen den Auflageabschnitt zu spannen, umfasst.

9. Ortungsverfahren nach Anspruch 8, wobei der Spannabschnitt (15) aus einer elastisch verformbaren Spannlasche gebildet ist.

10. Ortungsverfahren nach einem der Ansprüche 2 bis 9, wobei der vorgesehene Hydrant mindestens ein Schutzgehäuse (17) umfasst, das aus einem elektrisch nicht leitenden Material hergestellt ist, in das die Verbindungsmittel (11) montiert sind.

11. Ortungsverfahren nach einem der Ansprüche 2 bis 10, wobei der vorgesehene Hydrant Befestigungsmittel (28) umfasst, die eingerichtet sind, um die Verbindungsmittel (11) auf dem Körper (3) zu befestigen.

12. Ortungsverfahren nach Anspruch 11, wobei die Befestigungsmittel (28) elektrisch derart leitend sind, dass sie eine elektrische Kontinuität zwischen den Verbindungsmitteln (11) und dem Körper (3) sicherstellen.

## Claims

1. A detection method of a buried pipe, for example for water distribution, comprising the following steps:
- providing a valve box (2) including an electrically conductive body (3) having a generally tubular shape,
- fixing the body (3) of the valve box (2) in the ground plumb with a valve mounted on the pipe to be detected,
- electrically connecting to the body (3) of the valve box (2) at least one electrically conductive wire (10) extending at least partially along the pipe,
- injecting an electrical signal in the body (3) of the valve box (2), and
- detecting the electromagnetic field generated by the at least one electrically conductive wire (10).

2. The detection method according to claim 1, wherein the valve box includes connection means (11) to which is connected the at least one electrically conductive wire (10), the connection means (3) being connected to the body (3) so as to maintain an electrical continuity between the body (3) and each electrically conductive wire (10).

3. The detection method according to claim 2, wherein the connection means (11) are mounted on the body (3) so as to maintain an electrical continuity between the body (3) and the at least one electrically conductive wire (10).

4. The detection method according to claim 2 or 3, wherein the body (3) delimits at least one housing (8) in which the connection means are housed.

5. The detection method according to claim 4, wherein the body (3) includes a base (5) delimiting at least partially the housing (8).

6. The detection method according to claim 5, wherein the base (5) includes at least one passage (9) opening into the housing (8) and intended for the passage of the at least one electrically conductive wire (10).

7. The detection method according to any one of claims 2 to 6, wherein the connection means include at least one electrically conductive connection member (11) to which the at least one electrically conductive wire (10) is connected.

8. The detection method according to claim 7, wherein the connection member (11) comprises at least one support part (14a, 14b) and at least one clamping part (15) intended to clamp the at least one corresponding electrically conductive wire (10) against the support part.

9. The detection method according to claim 8, wherein the clamping part (15) is formed by an elastically deformable clamping tongue.

10. The detection method according to any one of claims 2 to 9, wherein the valve box comprises at least one protective casing (17) made of an electrically non conductive material in which the connection means (11) are mounted.

11. The detection method according to any one of claims 2 to 10, wherein the valve box comprises fixing means (28) arranged to fix the connection means (11) on the body (3).

12. The detection method according to claim 11, wherein the fixing means (28) are electrically conductive so as to ensure an electrical continuity between the connection means (11) and the body (3).
